(19) Europäisches Patentamt
European Patent Office
Office européen des brevets

(11) Publication number: **0 355 889 A1**

(12) # EUROPEAN PATENT APPLICATION

(21) Application number: 89202008.2

(22) Date of filing: 03.07.89

(51) Int. Cl.4: F01C 21/08 , C08G 65/40

(30) Priority: 05.07.88 GB 8815991

(43) Date of publication of application: 28.02.90 Bulletin 90/09

(84) Designated Contracting States: ES

(71) Applicant: **T&N TECHNOLOGY LIMITED**
**Cawston House Cawston**
**Rugby Warwickshire, CV22 7SB(GB)**

(72) Inventor: **Glyndwr, John Davies**
**2, Cox Crescent - Dunchurch**
**Rugby - Warwickshire(GB)**

(74) Representative: **Hadfield, Robert Franklin et al**
**T&N plc Group Patent Department Bowdon House Ashburton Road West Trafford Park**
**Manchester M17 1RA(GB)**

(54) **Improvements in or relating to rotor blades.**

(57) A rotor blade has a thermoplastic polymer matrix comprising a polycyanoaryl ether, and, dispersed in the matrix,

a) 0 to 60% by volume of friction and wear modifiers and
b) 0 to 60% by volume of reinforcing fibres the total of a) and b) being 10 to 60% by volume.

EP 0 355 889 A1

## Improvements in or relating to rotor blades

This invention relates to rotor blades, that is to say, blades for rotary pumps, compressors and the like.

Rotary pumps and the like comprise a rotor equipped with a number of blades which during operation sweep gas from an inlet to an outlet port. The blades keep contact with the surrounding stator, and are subject to high frictional forces especially at their tips; and it is accordingly common to inject a mist of lubricant liquid of low vapour pressure to coat the running surfaces and so reduce friction. Rotor blades for such apparatus are frequently made of asbestos cloth bonded with a thermosetting resin of the phenol formaldehyde type ie one obtained by the condensation of formaldehyde with a phenol, which may for example be phenol itself, a cresol or a polyhydroxy aromatic compound in which OH groups are attached direct to an aryl nucleus.

The manufacture of such blades is a relatively costly and time consuming process, since it requires the impregnation of a cloth, pressing and curing to make a sheet, and then the cutting of the sheet and then often the machining of the cut products to produce finished blades.

The present invention provides a rotor blade not requiring asbestos, and which is capable of being manufactured by cheaper processing techniques such as injection moulding, or extrusion followed by severing to length.

According to the present invention a rotor blade is composed of a thermoplastic polymer matrix comprising a polycyanoaryl ether, and dispersed in said matrix

a) friction and wear modifiers in an amount form 0 to 60 per cent by volume,

b) a reinforcing fibre in an amount from 0 to 60 per cent by volume, the total of a) and b) being 10 to 60 per cent by volume.

The polycyanoaryl ether is composed of aryl groups linked by ether linkages, at least a proportion of the aryl groups carrying a -CN group attached directly to the aromatic ring. An example of a polycyanoaryl ether is a polymer which has units of the formula

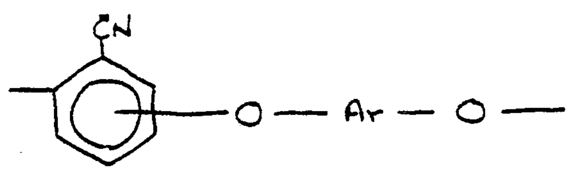

where - Ar- may be

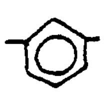 , 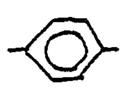 , 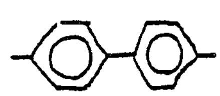 or 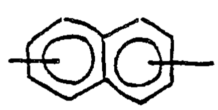

Such polymers are described in more detail in European Patent Applications Nos 0187638, 0193003, and 0243000 of Idemitsu Kosan Company Limited.

A particular example of a polycyanoaryl ether is a polyether nitrile of general formula,

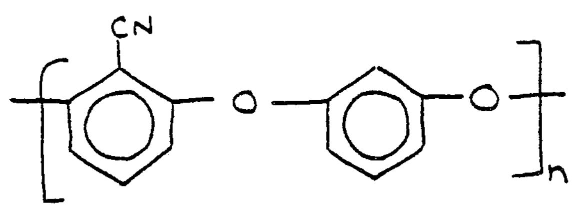

The friction and wear modifiers may be, for example, graphite, polytetrafluorethylene, oil-filled exfoliated graphite or mixtures of such fillers. The preferred filler is oil-filled exfoliated graphite which consists of exfoliated graphite having oil occluded in its interstices such as is more fully described in our co-pending UK Patent Application No 8812511. The filler is composed of dry exfoliated graphite and may contain an amount of lubricant 0.25 to 10 times the weight of the graphite.

Other friction and wear modifiers which may be used are alumina, antimony oxide, barium sulphate, boron nitride, cadmium sulphide, calcium fluoride, fine ceramic powder, clay, chromic oxide, powdered coke, copper oxide, ferric oxide, graphite fluoride, lead fluoride, lead iodide, lead oxides, lead sulphide, manganese ammonium phosphate, metal flake, metal powders, mica, molybdenum disulphide, phthalocyanines, polyoxy benzoate, silicon carbide, silicone, talc, wollastonite and zinc sulphide.

As reinforcing fibre carbon fibre, or a heat resistant aramid fibre may be used. Generally the preferred fibre is carbon fibre, which has some lubricating benefits, so that with this fibre the amount of lubricating filler may be reduced or even eliminated altogether for some purposes.

The fibres may be short fibres or in the case where a blade is to be made by extrusion a continuous filament or tow may be used in suitable extrusion equipment.

If desired the polycyanoaryl ether may be compounded with one or more other polymers in the polymer matrix. The amount of other polymer may be up to 50 per cent by volume of the polymer matrix and the polymer may be polyphenylene sulphide, polyetheramide or poly phenylene sulphide.

Examples of two different rotor blade materials based on a polycyanoaryl ether matrix are as follows:

## Example 1

A polycyanoaryl ether (polyether nitrile ID300 * - Idemitsu Kosan Company Limited) is compounded with powdered graphite so that the resulting composition is 50 per cent by volume of polymer and 50 per cent by volume of graphite. This is done in a conventional compounding extruder using a barrel temperature of 360 °C.

The resulting composition is moulded into rotor blades by injection moulding using a barrel temperature of 350 to 370 °C the blades being able to be moulded with a high degree of accuracy so that a minimum amount of grinding is required to finish them.

## Example 2

A polycyanoaryl ether (polyether nitrile ID300 * ) is compounded with oil-filled exfoliated graphite and carbon fibre (2mm) to produce a composition containing 60 per cent by volume of the polyether nitrile, 30 per cent by volume of oil-filled exfoliated graphite and 10 per cent by volume carbon fibre.

The oil-filled exfoliated graphite contains 50 per cent volume of silicone oil.

Compounding is carried out in a compounding extruder at a barrel temperature of 360 °C and the compounded composition may then be moulded into rotor blades by injection moulding as before, using similar barrel temperatures. In this case the rotor blades are self-lubricating owing to the presence of the oil in the filler.

## Claims

1. A rotor blade which is composed of a thermoplastic polymer matrix and dispersed in said matrix
a) friction and wear modifiers in an amount from 0 to 60 per cent by volume,
b) a reinforcing fibre in an amount from 0 to 60 per cent by volume,
characterised in that the thermoplastic polymer matrix comprises a polycyanoaryl ether, and the total of a) and b) is 10 to 60 per cent by volume.

* Polyether nitrile ID300 is a polycyanoaryl ether of general formula

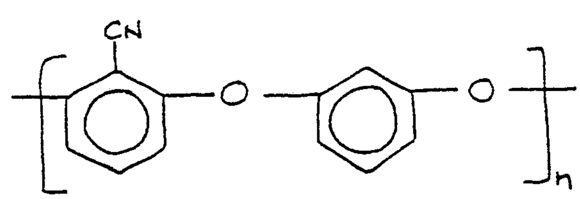

having a melting point of 340°C.

2. A rotor blade according to claim 1 wherein the polycyanoaryl ether is a polymer which has units of the formula

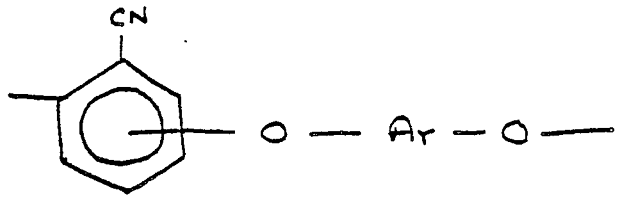

where - Ar- may be

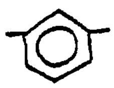 , 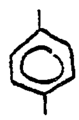 , 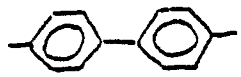 or 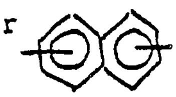

3. A rotor blade according to claim 1 or 2 wherein the polycyanoaryl ether is a polyether nitrile of general formula

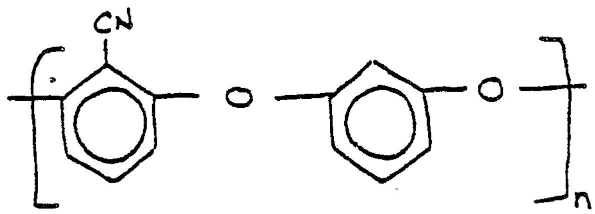

4. A rotor blade according to any one of claims 1 to 3 wherein the reinforcing fibres are carbon fibres.

5. A rotor blade according to any preceding claim wherein the polymer matrix includes one or more other polymers in an amount not more than a total of 50 per cent by volume of the polymer matrix.

6. A rotor blade according to claim 1, 2 or 3 characterised in that it comprises a matrix of polyether nitrile filled with graphite.

7. A rotor blade according to claim 1, 2 or 3 characterised in that it comprises a matrix of polyether nitrile with carbon fibre as reinforcing fibre and oil-filled exfoliated graphite as friction and wear modifier.

European Patent Office

# EUROPEAN SEARCH REPORT

Application Number

EP 89 20 2008

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-19605 (INSTITUT CERAC)<br>* page 2, line 8 - page 3, line 23 *<br>* page 4, line 10 - page 5, line 27 *<br>* page 6, lines 21 - 24 *<br>* page 7, lines 17 - 20 *<br>--- | 1-6 | F01C21/08<br>C08G65/40 |
| Y,D | EP-A-243000 (IDEMITSU KOSAN)<br>* page 13, lines 11 - 16 *<br>* page 15, lines 10 - 36 *<br>* page 16 *<br>* page 17 *<br>--- | 1-6 | |
| Y,D | EP-A-193003 (IDEMITSU KOSAN)<br>* page 1, lines 3 - 16 *<br>* page 2, lines 6 - 21 *<br>* page 4 *<br>* page 5, line 1,2 *<br>* page 8, line 1 - page 9, line 11 *<br>--- | 1-4 | |
| Y | DE-U-8536125 (VOLKSWAGEN)<br>* page 5, lines 11 - 23 *<br>--- | 1 | **TECHNICAL FIELDS SEARCHED (Int. Cl.5 )** |
| A | FR-A-1232120 (WITTIG)<br>* page 1, right-hand column, lines 6 - 14 *<br>--- | 1, 6 | F01C<br>C08G |
| A | EP-A-96962 (T&N MATERIALS RESEARCH)<br>* page 1, lines 2 - 6 *<br>* page 1, line 15 - page 2, line 29 *<br>* page 7, line 18 - page 9, line 8 *<br>* page 11 *<br>----- | 1, 2, 6 | |

The present search report has been drawn up for all claims

| Place of search | Date of completion of the search | Examiner |
|---|---|---|
| THE HAGUE | 27 NOVEMBER 1989 | KAPOULAS T. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document



EPO FORM 1503 03.82 (P0401)